Europäisches Patentamt

European Patent Office

Office européen des brevets

(19)

(11) Numéro de publication : **0 074 452**
**B1**

(12) **FASCICULE DE BREVET EUROPÉEN**

(45) Date de publication du fascicule du brevet :
24.04.85

(21) Numéro de dépôt : 81401412.2

(22) Date de dépôt : 11.09.81

(51) Int. Cl.⁴ : **B 23 C   9/00**, B 23 B  39/02

(54) **Dispositif d'accouplement pour têtes de fraisage.**

(43) Date de publication de la demande :
23.03.83 Bulletin 83/12

(45) Mention de la délivrance du brevet :
24.04.85 Bulletin 85/17

(84) Etats contractants désignés :
DE FR GB IT

(56) Documents cités :
DE-A- 2 061 028
FR-A- 1 552 061
FR-A- 1 556 874
FR-A- 2 101 741
FR-A- 2 196 868
FR-A- 2 258 241
FR-A- 2 344 363
GB-A-   575 658
Le dossier contient des informations techniques présentées postérieurement au dépôt de la demande et
ne figurant pas dans le présent fascicule.

(73) Titulaire : **FOREST LINE**
**124, Bd Haussmann**
**F-75008 Paris (FR)**

(72) Inventeur : **Meresse, Daniel L.**
**24, Parc de la Treille**
**F-60270 Gouvieux (FR)**
Inventeur : **Kwapisz, Jean J.**
**100, Chemin Croisé**
**F-80300 Albert (FR)**

(74) Mandataire : **Moulines, Pierre et al**
**Cabinet BEAU de LOMENIE 55, rue d'Amsterdam**
**F-75008 Paris (FR)**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

EP 0 074 452 B1

## Description

La présente invention a pour objet un dispositif d'accouplement pour têtes de fraisage.

L'exécution de certains usinages avec une tête de fraisage du type à coulant ou à fourreau nécessite l'utilisation d'accessoires amovibles tels que des renvois d'angles, des organes de prolongation etc... constitués d'un carter disposant de moyens de fixation sur la tête de fraisage et contenant un ensemble de moyens de transmission (arbres, engrenages) qui transmettent le mouvement de rotation de la broche porte-outil de la tête de fraisage à la broche porte-outil de l'accessoire amovible.

La manutention et la fixation de ces accessoires amovibles sont le plus souvent effectués par des moyens manuels d'où il résulte que ces opérations prennent un temps important et qu'elles nécessitent compte tenu du poids de ces accessoires, plusieurs opérateurs.

Il est donc particulièrement avantageux d'organiser cette manutention et cette fixation par des moyens automatiques. Il est connu d'automatiser cette manutention et cette fixation en aménageant dans la face avant de la tête de fraisage des moyens de retenue et de fixation du type, par exemple, à tenons actionnés par des vérins hydrauliques et en aménageant dans la face d'appui des accessoires amovibles sur la tête de fraisage des rainures en té dans lesquelles ces tenons sont engagés.

Ces dispositifs présentent au moins deux inconvénients qui en limitent l'intérêt. D'une part, le positionnement précis de l'accessoire amovible sur la tête de fraisage s'effectue grâce à l'aménagement sur cette dernière de portées formant clavettes ou tenons sur lesquelles viennent s'engager des évidements formant mortaise aménagés sur l'accessoire. L'engagement des clavettes ou tenons dans les mortaises doit s'effectuer à faible vitesse et avec un faible effort pour éviter les usures ou détériorations. Il s'agit donc d'une opération longue et qui nécessite des mécanismes de précision. D'autre part, il est difficile, avec ces dispositifs de combiner des mécanismes permettant de faire effectuer automatiquement à l'accessoire amovible une rotation d'un angle déterminé par rapport à l'axe de la broche de la tête de fraisage.

Or, l'obtention d'une plus grande productivité des fraiseuses entraîne, d'une part, à réduire autant que possible la durée des diverses opérations, en particulier de pose et dépose des accessoires amovibles, et d'autre part, à utiliser des dispositifs permettant, avec les mêmes accessoires du type par exemple à renvoi d'angle, d'usiner plusieurs faces non parallèles comme par exemple, les quatre faces latérales d'un parallélépipède sans démontage dudit accessoire.

Le brevet FR-A-1.552.061 concerne un dispositif sur une poupée de tour pour le montage d'un mandrin sur une broche. Dans ce dispositif il est prévu un élément tubulaire intérieur à la broche qui est actionné hydrauliquement pour maintenir au moyen de cannelures le mandrin serré contre le nez de la broche.

Toutefois, il s'agit dans ce cas d'un mandrin rotatif avec la broche et il ne comporte pas de moyens de positionnement et de centrage du corps.

Le dispositif suivant la présente invention permet une pose et une dépose rapide des accessoires et permet leur rotation rapide d'un angle d'une valeur déterminée parmi un certain nombre de valeurs possibles autour de l'axe de la broche de la tête de fraisage.

Conformément à la présente invention, dans le corps de la tête de fraisage est monté rotatif et coulissant axialement sous l'action d'organes de commande un manchon dans lequel la broche est montée rotative, ledit manchon comportant sur la partie extérieure au corps des organes de verrouillage correspondants prévus sur le corps de l'accessoire, ledit corps de la tête de fraisage présentant sur sa face avant à sa périphérie et en dehors du manchon des moyens de positionnement et de centrage qui sont susceptibles d'être engagés avec des moyens correspondants prévus à la périphérie du corps de l'accessoire.

Le dispositif selon l'invention permet d'orienter commodément et sans démontage l'accessoire amovible par rotation autour de l'axe de la broche porte-outil de la tête de fraisage, lorsque cet axe est sensiblement vertical. A cet effet, le manchon est déplacé axialement d'une valeur suffisante pour que les éléments de mise en position des faces d'appui de la tête de fraisage et de l'accessoire amovible ne soient plus en relation, puis, l'accessoire demeurant suspendu sous son propre poids au manchon, par une rotation d'un angle déterminé de ce dernier autour de l'axe de la broche de la tête de fraisage, l'accessoire est amené dans la position choisie et, par un mouvement axial du manchon, l'accessoire est de nouveau positionné et bloqué sur la tête de fraisage.

Au cas où, le centre de gravité de l'accessoire n'est pas à la verticale du centre de la face d'appui de la tête de fraisage, il ne peut pas demeurer suspendu par son propre poids en position correcte sur le manchon lors d'une telle opération d'orientation. Il est alors commode d'aménager dans le manchon un dispositif qui comporte des éléments pouvant prendre appui avec une force suffisante sur la face d'appui de l'accessoire.

L'accessoire peut alors être solidarisé au manchon par la mise en action de ce dispositif, et il peut être mis en position quelle que soit la position de son centre de gravité.

Lors de la dépose des accessoires, un dispositif auxiliaire assure le blocage en rotation de l'arbre d'entraînement de l'accessoire, dans une position qui est en concordance exacte avec une position indexée à la broche de la tête de fraisage. Ainsi, lors de la reprise de cet accessoire les tenons et clavettes d'entraînement de l'arbre de l'accessoire par la broche de la tête sont en position d'engagement, sans aucune opération de réglage.

Enfin, pour protéger la face d'appui de la tête de fraisage, il est fait appel à une plaque de protection, organisée de la même manière que la face d'appui des accessoires et aménagée pour permettre une utilisation normale de la broche porte-outil de la tête de fraisage.

D'autres caractéristiques et avantages de l'invention seront mieux compris à la lecture de la description qui va suivre d'un exemple de réalisation et en se référant aux dessins annexés, dans lesquels :

La figure 1   est une vue en coupe longitudinale partielle d'une tête de fraisage équipée d'un dispositif suivant l'invention.

La figure 2   est une vue en bout de la face d'appui de la tête de fraisage représentée à la figure 1.

La figure 3   est une vue en coupe longitudinale partielle d'un accessoire amovible équipé d'un dispositif suivant l'invention.

La figure 4   est une vue de dessus de la face d'appui de l'accessoire amovible représenté à la figure 3.

La figure 5   est une vue en coupe d'une plaque de protection destinée à être montée sur la tête de fraisage représentée à la figure 1 lorsqu'elle n'est pas équipée d'un accessoire amovible.

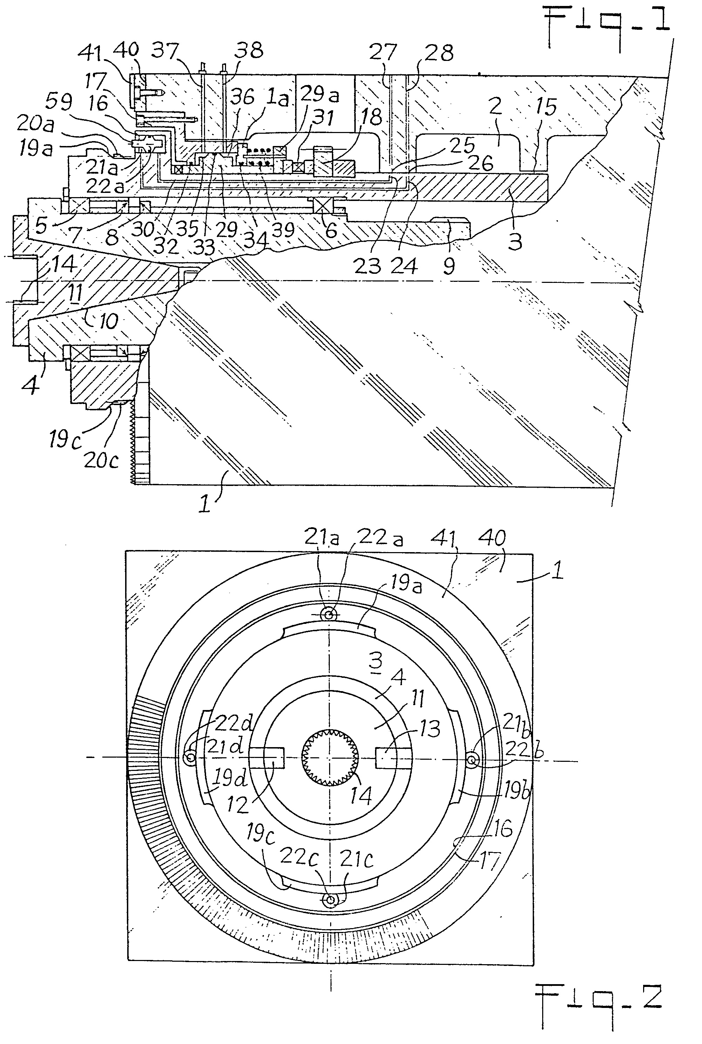

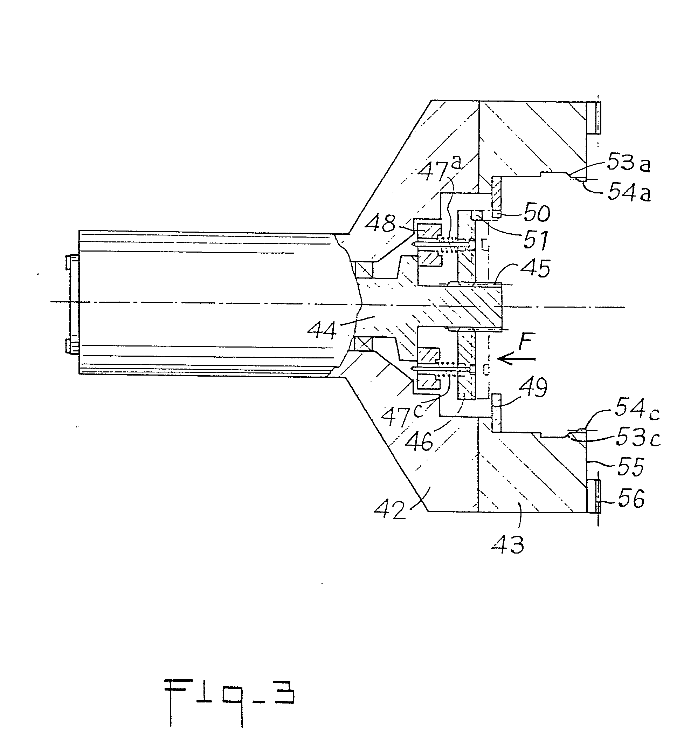

La tête de fraisage perfectionnée suivant l'invention et représentée aux figures 1 et 2 cmprend un corps 1 présentant un alésage 2 dans lequel est monté rotatif et coulissant axialement un manchon 3. Une broche porte-outil 4 est montée rotative dans le manchon 3 au moyen de paliers 5, 6 notamment de roulements à rouleaux et elle est montée solidaire axialement du manchon 3 par des organes de butée 7, 8 notamment des butées à billes. A l'une de ses extrémités la broche 4 comporte des cannelures 9 qui sont susceptibles de coopérer avec des cannelures correspondantes d'un organe moteur ou de moyens de transmission non représentés au dessin pour l'entraînement en rotation de la broche 4. A son autre extrémité la broche 4 comporte un évidement tronconique 10 dans lequel peut être fixé un cône d'entraînement 11 rendu solidaire de la broche 4 au moyen de clavettes 12, 13. Le cône d'entraînement 14 présente un alésage dans lequel sont ménagées des cannelures intérieures 14.

Le manchon 3 est guidé dans le corps 1 à l'une de ses extrémités par un palier lisse 15 et à l'autre extrémité par une portée 16 montée avec un faible jeu dans un alésage 17 ménagé dans le corps 1.

Coaxialement au manchon 3 est monté sur celui-ci un pignon denté 18 rendu solidaire dudit manchon par des clavettes, ledit pignon 18 engrenant avec un autre pignon, non représenté au dessin, et qui est relié à un organe moteur par un dispositif de transmission pour l'entraînement en rotation du manchon 3. Des moyens d'indexation permettent de réaliser une rotation indexée du manchon 3.

A son autre extrémité le manchon 3 comporte des épaulements tronconiques 19a, 19b, 19c, 19d en forme de secteurs disposés selon deux diamètres perpendiculaires et s'étendant chacun suivant une valeur angulaire d'un peu moins de 45 degrés. Entre les épaulements 19a-19d et la face avant 40 de la tête de fraisage sont ménagés sur le petit diamètre du manchon 3 et à proximité desdits épaulements des secteurs cannelés 20a, 20b, 20c, 20d ayant la même valeur angulaire que les épaulements tronconiques 19a, 19d.

Suivant un autre mode de réalisation non représenté au dessin, les secteurs cannelés peuvent être remplacés par deux clavettes ménagées sur le manchon 3 et entre lesquelles sont engagés les épaulements tronconiques de l'accessoire amovible.

Le manchon 3 comporte des alésages 21a, 21b, 21c, 21d dans lesquels coulissent des pistons 22a, 22b, 22c qui présentent chacun un doigt 59 susceptible de venir en contact avec la face d'appui de l'accessoire qui est monté sur la tête de fraisage.

Les espaces délimités par les faces avant et arrière des pistons 22 dans les alésages 21 sont en communication avec des conduits 23 et 24 aménagés dans le manchon 3, lesdits conduits communiquant au moyen de joints tournants 25, 26 avec des conduits 27, 28 d'amenée de fluide sous pression prévus dans le corps 1.

Sur le manchon 3 est monté rotatif et solidaire axialement par des butées 30, 31 un piston annulaire 29. Des joints rotatifs 32, 33, 34 sont disposés entre le manchon 29 et des alésages prévus dans le corps 1, constituant ainsi deux chambres de révolution 35, 36 en communication par des conduits 37, 38 avec une source de fluide sous pression. Entre le corps 1 et le manchon 29 sont disposés des organes de liaison élastiques 39 qui sont en appui d'un côté contre un organe 1a du corps 1 et d'autre part contre un épaulement 29a du manchon 29.

Sur la face avant 40 du corps 1 sont fixés des organes de centrage et de positionnement du type à clavettes ou constitués comme représenté aux figures 1 et 2 par une couronne dentée 41.

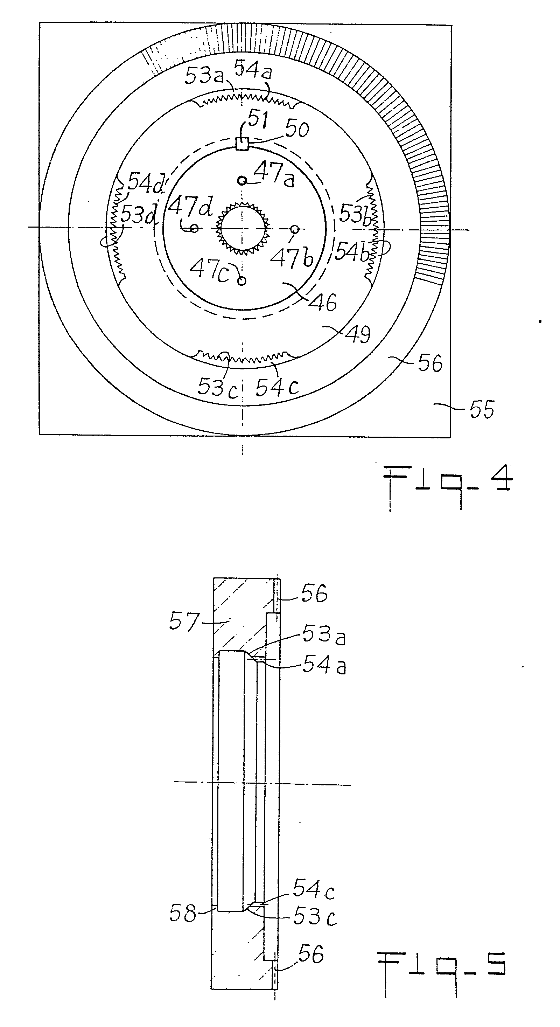

Aux figures 3 et 4 on a représenté un accessoire amovible susceptible d'être monté sur la tête de fraisage décrite ci-dessus. L'accessoire représenté est une allonge de broche mais il pourrait être constitué d'un renvoi d'équerre ou de tout autre accessoire. Cet accessoire est constitué d'un corps en deux parties 42, 43, dans lequel est monté rotative une broche porte-outil 44 au moyen de paliers notamment à roulements et de butées. L'une des extrémités de la broche 44 comporte des cannelures extérieures 45 qui correspondent à celles 14 du cône d'entraînement 11 et qui assurent l'entraînement en rotation de la broche 44 à partir de la broche 4.

Sur les cannelures 45 est monté coulissant axialement un disque 46. Des organes élastiques 47a, 47b, 47c, 47d interposés entre un épaulement 48 de la broche 44 et le disque 46 repoussent ce dernier vers l'extrémité libre des cannelures 45 et l'appliquent contre une couronne circulaire 49 solidaire du corps 43 et d'un diamètre intérieur plus faible que le diamètre extérieur du disque 46. Dns la couronne 49 est ménagé un logement 50 dans lequel est susceptible d'être engagée une clavette 51, solidaire du disque 46. Ainsi dans la position de repos du disque 46 représentée en traits interrompus à la figure 3, la clavette 51 solidarise en rotation le corps 42, 43 et la broche 44 de l'accessoire.

Inversement une poussée axiale suivant une flèche F comprime les organes élastiques 47 et provoque le coulissement du disque 46 sur les cannelures 45, de telle sorte que la clavette 51 est dégagée du logement 50, autorisant ainsi la rotation de la broche 44 par rapport au corps 42, 43.

La partie 43 du corps de l'accessoire présente un alésage 52 dans lequel sont prévus des épaulements tronconiques 53a, 53b, 53c, 53d qui correspondent et peuvent coopérer avec les épaulements 19 du manchon 3 qui présentent la même valeur angulaire, ainsi que des secteurs cannelés 54a, 54b, 54c, 54d correspondants aux secteurs cannelés 20 du manchon 3.

La face extérieure 55 de l'accessoire comporte des organes de positionnement et de centrage qui correspondent et coopèrent avec ceux de la face avant 40 du corps 1 de la tête de fraisage du type à clavettes ou comme représenté aux figures 3, 4 du type à couronne dentée 56.

Les opérations de pose et de dépose de l'accessoire sur la tête de fraisage s'effectuent de la manière suivante : L'accessoire et la tête de fraisage sont d'abord placés de telle sorte que l'axe de la broche 44 de l'accessoire et celui de la broche 4 de la tête de fraisage coïncident. Le manchon 3 est alors indexé dans une position telle que ses épaulements 19 occupent les espaces libres prévus entre les épaulements 53 de l'accessoire. L'accessoire est alors engagé sur la tête de fraisage jusqu'à ce que les moyens de positionnement et de centrage 41, 56 soient sur le point de coopérer. Lors de ce mouvement, l'arbre cannelé 45 a pénétré dans le logement cannelé 14 solidarisant en rotation les broches 4 et 44. Par ailleurs la face avant du cône d'entraînement 14 entre en contact avec le disque 46 alors en repos contre la couronne circulaire 50.

Du fluide sous pression est alors envoyé par le conduit 38 dans la chambre 36, ce qui provoque le déplacement axial du piston annulaire 29 et du manchon 3 dont il est solidaire vers l'intérieur de l'accessoire tandis que les organes élastiques 39 se trouvent comprimés. Le disque 46 étant repoussé vers l'intérieur du corps 42, la clavette 51 est dégagée de son logement 30. Les épaulements 19 et 53 ainsi que les secteurs cannelés 20 et 54 occupent des positions axiales respectives qui autorisent leur rotation relative.

En actionnant les moyens de rotation et d'indexation agissant sur le pignon 18, le manchon 3 est entraîné en rotation suivant un angle de 45 degrés, de telle sorte que les épaulements conjugués 19 et 53 et les secteurs cannelés 20 et 54 occupent des positions angulaires qui coïncident. Dans ce mouvement, la rotation du manchon 3 par rapport au piston annulaire 21 est facilitée par les butées 30, 31.

L'arrivée de fluide sous pression dans la chambre 36 est alors interrompue et la chambre 35 est mise sous pression par le conduit 37. Sous l'action conjuguée de la pression régnant dans la chambre 35 qui agit sur le piston 29 et des organes élastiques 39, le manchon 3 se déplace axialement vers la tête de fraisage, ce qui provoque l'engrènement des secteurs cannelés 20 et 54, la mise en appui des épaulements 19 et 53 ainsi que la mise en appui de la face extérieure 55 de l'accessoire sur la face avant 40 de la tête de fraisage par l'intermédiaire des moyens de positionnement et de centrage conjugués 41 et 56.

Pendant le déroulement de cette dernière phase, du fluide sous pression est envoyé par les conduits 27, 28 sur la face arrière des pistons 22. Lors du mouvement de retrait du manchon 3 dans la tête de fraisage, les doigts 59 de ces pistons appliquent par l'intermédiaire de la face 55 les épaulements 19 et 53 les uns contre les autres, solidarisant ainsi le manchon 3 et l'accessoire et évitant tout basculement de l'accessoire même si son centre de gravité n'est pas à la verticale du centre de la face avant de la tête de fraisage. Ainsi, les accessoires n'ont-ils pas à être équilibrés ou peuvent-ils être fixés même si l'axe de la tête de fraisage n'est pas vertical.

Bien entendu, la dépose de l'accessoire s'effectue suivant un déroulement inverse des opérations précédentes. Il faut noter que, à l'issue de cette dépose, l'axe de la broche 44 de l'accessoire est bloqué en rotation par la clavette 51 ce qui permet de garantir que les broches 4 et 44 occupent toujours la même position angulaire relative, et constitue une condition indispensable pour organiser commodément le changement automatique des outils dans lesdites broches.

Par ailleurs, lorsque l'accessoire est en place sur la tête de fraisage, la simple combinaison d'un déplacement axial du manchon 3, d'une rotation indexée de ce même manchon puis d'un retrait dudit manchon permet, à conditions que les moyens de positionnement et de centrage combinés 41 et 56 soient disposés en conséquence, une rotation indexée de l'accessoire par rapport à la tête de fraisage dans dépose et repose. L'utilisation combinée des pistons 22 permet d'exécuter cette rotation indexée quelle que soit la position du centre de gravité de l'accessoire par rapport à la verticale du centre de la face avant de la tête de fraisage.

Si aucun accessoire n'est utilisé, il est nécessaire de protéger la face avant de la tête de fraisage et du manchon 3 qui comportent tous les deux des organes de précision et à cet effet, on utilise une plaque de protection 57 représentée à la figure 5.

Cette plaque de protection 57 comporte les mêmes organes que la face extérieure des acces-

**0 074 452**

soires et en particulier les épaulements 53, les secteurs cannelés 54 et les moyens de positionnement et de centrage 56. La plaque comporte un alésage 58 dont le diamètre est adapté au diamètre du manchon 3 de telle sorte qu'un jeu minime subsiste entre ledit manchon et la plaque de protection 57 lorsque cette dernière est en place, ce qui protège efficacement la face avant de la tête de fraisage.

Par ailleurs, la combinaison des moyens d'appui et de centrage que constituent les épaulements 19, 53 et les moyens de positionnement et de centrage 41, 56 guide efficacement la partie avant du manchon 3 tandis que sa partie arrière est guidée par le palier 15. Ainsi l'axe du manchon 3 et par conséquent celui de la broche 4 occupe une position précise par rapport au corps 1 de la tête de fraisage.

Bien entendu diverses modifications peuvent être apportées par l'homme de l'art aux dispositifs ou procédés qui viennent d'être décrits uniquement à titre d'exemple non limitatif, sans sortir du cadre de l'invention comme revendiqué.

**Revendications**

1. Dispositif d'accouplement pour têtes de fraisage comportant un corps dans lequel est montée rotative une broche (4) porte-outil et sur lesquelles sont susceptibles d'être rapportés des accessoires amovibles comportant un corps et une broche rotative porte-outil ; caractérisé en ce que dans le corps (1) de la tête de fraisage est monté rotatif et coulissant axialement sous l'action d'organes de commande, un manchon (3) dans lequel la broche (4) est montée rotative, ledit manchon (3) comportant sur la partie extérieure au corps (1) des organes de verrouillage (19a, 19b, 19c, 19d et 20a, 20b, 20c, 20d) à baïonnette qui coopèrent avec des organes de verrouillage correspondants (53a, 53b ; 53c, 53d et 54a, 54b, 54d, 54c) prévus le corps (42, 43) de l'accessoire, ledit corps (1) de la tête de fraisage présentant sur sa face avant à sa périphérie et en dehors du manchon (3) des moyens de positionnement et de centrage (41) qui sont susceptibles d'être engagés avec des moyens correspondants (56) prévus à la périphérie du corps (42, 43) de l'accessoire.

2. Dispositif d'accouplement pour têtes de fraisage suivant la revendication 1, caractérisé en ce que les organes de verrouillage à baïonnette sont constitués par des épaulements sectoriels tronconiques (19, 19b, 19c, 19d) séparés entre eux par des espaces libres pour le passage d'épaulements correspondants (53a, 53b, 53c, 53d) sur l'accessoire à accoupler, et par des secteurs cannelés (20a, 20b, 20c, 20d) de même valeur angulaire que les épaulements et qui coopèrent avec des secteurs cannelés correspondants (54a, 54b, 54c, 54d) prévus sur le corps de l'accessoire.

3. Dispositif d'accouplement pour têtes de fraisage suivant la revendication 1, caractérisé en ce que le moyen de déplacement axial de commande du manchon (3) est constitué d'un piston annulaire (29) monté rotatif sur le manchon (3) et solidaire axialement de ce dernier, ledit piston (29) étant monté coulissant dans un espace annulaire de manière à délimiter de part et d'autre du piston deux chambres (35, 36) qui sont reliées par deux conduits (37, 38) à deux sources de fluide sous pression.

4. Dispositif d'accouplement pour têtes de fraisage suivant la revendication 1, caractérisé en ce qu'il est prévu des organes élastiques (39) entre le corps 1 et le manchon (3) assurant le maintien de l'accessoire contre la face avant (40) de la tête de fraisage.

5. Dispositif d'accouplement pour têtes de fraisage suivant la revendication 1 caractérisé en ce que sur le pourtour du manchon (3) sont prévus des cylindres (21a, 21b, 21c, 21d) angulairement espacés dans lesquels sont disposés des pistons (22a, 22b, 22c, 22d) munis de doigts (59) de poussée axiale du corps (42, 43) de l'accessoire contre les organes de verrouillage du manchon (3), lesdits cylindres (21a, 21b, 21c, 21d) étant reliés par des conduits (23, 24) à un circuit de fluide sous pression.

6. Dispositif d'accouplement pour têtes de fraisage suivant la revendication 1, caractérisé en ce que la broche (44) de l'accessoire qui est susceptible d'être reliée à la broche (4) de la tête de fraisage comporte un plateau coulissant (6) muni d'une clavette (51) de verrouillage en rotation susceptible d'être engagée dans un logement (50) d'une couronne (49) solidaire du corps (43) de l'accessoire sous l'action d'organes élastiques (47a, 47b, 47c, 47d) disposés entre la broche (44) et le plateau coulissant (46).

7. Dispositif d'accouplement pour têtes de fraisage suivant les revendications 1 et 2 caractérisé en ce que sur la face avant (40) de la tête de fraisage et en l'absence d'accessoire est montée une plaque de protection (57) comportant des organes de verrouillage (53a, 53b, 53c, 53d,-54a, 54b, 54c, 54d) qui coopèrent avec les organes de verrouillage du manchon (3), ladite plaque (57) comportant sur son pourtour des organes de positionnement et de centrage (56) coopérant avec les organes correspondants prévus sur le corps (1) de la tête de fraisage.

**Claims**

1. Coupling device for milling heads comprising a body in which a tool-holding spindle (4) is mounted for rotating and on which heads can be added removable fittings comprising a body and a rotary tool-holding spindle, characterized in that in the body (1) of the milling head a sleeve (3) is mounted for rotating and axial sliding under the action of control members, in which sleeve the spindle (4) is mounted for rotating, and said sleeve (3) comprising on the part external to the body (1) bayonet locking members (19a, 19b, 19c, 19d and 20a, 20b, 20c, 20d) cooperating with corresponding locking members (53a, 53b, 53c, 53d and 54a, 54b, 54d, 54c) provided in the body (42, 43) of the fitting, said body (1) of the milling head having on its front face, on its periphery and outside the sleeve (3), positioning and centering means (41) adapted to be engaged with corresponding means (56) provided on the periphery of the body (42, 43) of the fitting.

2. Coupling device for milling heads according to claim 1, characterized in that the bayonet locking members are constituted by truncated sectorial shoulders (19, 19b, 19c, 19d) separated one from the other by free spaces to allow the passage of corresponding shoulders 53a, 53b, 53c, 53d) on the fitting to be coupled, and by grooved sectors (20a, 20b, 20c, 20d) of same angular value as the shoulders and which cooperate with correspondingly grooved sectors (54a, 54b, 54c, 54d) provided on the body of the fitting.

3. Coupling device for milling heads according to claim 1, characterized in that the controlled axial displacement of the sleeve (3) is constituted by an annular piston (29) rotatably mounted on the sleeve (3) and axially integral therewith, said piston (29) being mounted for sliding in an annular space so as to define on both sides of the piston two chambers (35, 36) which are connected by two ducts (37, 38) with two sources of pressurized fluid.

4. Coupling device for milling heads according to claim 1, characterized in that elastic members (39) are provided between the body (1) and the sleeve (3) for keeping the fitting in position against the front face (40) of the milling head.

5. Coupling device for milling heads according to claim 1, characterized in that on the periphery of the sleeve (3), angularly spaced cylinders (21a, 21b, 21c, 21d) are provided, in which cylinders pistons (22a, 22b, 22c, 22d) are placed and provided with fingers (59) exerting an axial thrust force on the body (42, 43) of the fitting, pushing same against the sleeve (3) locking members, said cylinders (21a, 21b, 21c, 21d) being connected via ducts (23, 24) to a circuit of pressurized fluid.

6. Coupling device for milling heads according to claim 1, characterized in that the spindle (44) of the fitting which is adapted to be connected to the spindle (4) of the milling head comprises a sliding plate (6) provided with a rotatably locking key (51) able to be engaged in a housing (50) of a ring member (49) integral with the fitting body (43) under the action of elastic members (47a, 47b, 47c, 47d) placed between the spindle (44) and the sliding plate (46).

7. Coupling device for milling heads according to claims 1 and 2, characterized in that on the front face (40) of the milling head and without a fitting is mounted a protecting plate (57) comprising locking members (53a, 53b, 53c, 53d-54a, 54b, 54c, 54d) which cooperate with the locking members of the sleeve (3), said plate (57) comprising on its periphery positioning and centering means (56) which cooperate with the corresponding members provided on the body (1) of the milling head.

**Patentansprüche**

1. Kuppelvorrichtung für Fräsköpfe, die einen Körper aufweisen, in dem eine Werkzeughaltespindel (4) drehbar gelagert ist und an denen ein abnehmbares Zubehörbefestigt werden kann, das einen Körper und eine drehbare Werkzeughaltespindel aufweist, dadurch gekennzeichnet, daß im Körper (1) des Fräskopfs drehbar und unter der Wirkung von Steuerorganen axial verschiebbar eine Hülse (3) gelagert ist, in der Spindel (4) drehbar gelagert ist, wobei die Hülse (3) auf dem außerhalb des Körpers (1) gelegenen Teil Bajonett-Verriegelungsorgane (19a, 19b, 19c, 19d und 20a, 20b, 20c, 20d) aufweist, die mit entsprechenden im Körper (42, 43) des Zübehörs vorgesehenen Verriegelungsorganen (53a, 53b, 53c, 53d und 54a, 54b, 54c, 54d) zusammenarbeiten, wobei der Körper (1) des Fräskopfs auf seiner Vorderseite an seinem Umfang und außerhalb der Hülse (3) Positionier- und Zentriereinrichtungen (41) aufweist, die mit entsprechenden Einrichtungen (54) in Eingriff gebracht werden können, die am Umfang des Körpers (42, 43) des Zubehörs vorgesehen sind.

2. Kuppelvorrichtung für Fräsköpfe nach Anspruch 1, dadurch gekennzeichnet, daß die Bajonett-Verriegelungsorgane gebildet sind durch: sektorförmige kegelstumpfförmige Schultern (19, 19b, 19c, 19d), die durch dazwischenliegende freie Zwischenräume für den Durchtritt von entsprechenden Schultern (53a, 53b, 53c, 53d) am zu kuppelnden Zubehör getrennt sind, und durch gerillte Sektoren (20a, 20b, 20c, 20d), die denselben Winkelwert wie die Schultern haben und mit entsprechenden gerillten Sektoren (54a, 54b, 54c, 54d) am Körper des Zubehörs zusammenarbeiten.

3. Kuppelvorrichtung für Fräsköpfe nach Anspruch 1, dadurch gekennzeichnet, daß die Steuereinrichtung für die axiale Verschiebung der Hülse (3) aus einem ringförmigen Kolben (29) besteht, der auf der Hülse drehbar gelagert und mit dieser letzteren axial fest verbunden ist, wobei der genannte Kolben (29) in einem Ringraum derart verschiebbar gelagert ist, daß beiderseits des Kolbens zwei Kammern (35, 36) begrenzt werden, die über zwei Leitungen (37, 38) mit zwei Quellen für unter Druck stehendes Druckmittel verbunden sind.

4. Kuppelvorrichtung für Fräsköpfe nach Anspruch 1, dadurch gekennzeichnet, daß zwischen dem Körper (1) und der Hülse (3) elastische Organe (39) vorgesehen sind, die das Halten des Zubehörs an der Vorderseite (40) des Fräskopfs sicherstellen.

5. Kuppelvorrichtung für Fräsköpfe nach Anspruch 1, dadurch gekennzeichnet, daß auf dem Umfang der Hülse (3) im Winkel beabstandete Zylinder (21a, 21b, 21c, 21d) vorgesehen sind, in denen Kolben (22a, 22b, 22c, 22d) angeordnet sind, die mit Zapfen (59) versehen sind zum axialen Drücken des Körpers (42, 43) des Zubehörs gegen die Verriegelungsorgane der Hülse (3), wobei die Zylinder (21a, 21b, 21c, 21d) über Leitungen (23, 24) mit einem Kreislauf für unter Druck stehende Druckmittel verbunden sind.

6. Kuppelvorrichtung für Fräsköpfe nach Anspruch 1, dadurch gekennzeichnet, daß die Spindel (44) des Zubehörs, die mit der Spindel (4) des Fräskopfs verbunden werden kann, eine verschiebbare Platte (46) aufweist, die mit einem Keil (51) zur Verriegelung gegen Verdrehung versehen ist, der unter der Wirkung eines zwischen der Spindel (44) und der verschiebbaren Platte (46) angeordneten elastischen Organs (47a, 47b, 47c, 47d) in einen mit dem Körper (43) des Zubehörs fest verbundenen Kranz (49) eingesetzt werden kann.

7. Kuppelvorrichtung für Fräsköpfe nach den Ansprüchen 1 und 2, dadurch gekennzeichnet, daß auf der Vorderseite (40) des Fräskopfs und bei Abwesenheit des Zubehörs eine Schutzplatte (57) mit Verriegelungsorganen (53a, 53b, 53c, 53d und 54a, 54b, 54c, 54d) angebracht ist, die mit den Verriegelungsorganen der Hülse (3) zusammenarbeiten, wobei die Platte (57) an ihrem Umfang Positionier- und Zentrierorgane (56) aufweist, die mit entsprechenden Organen am Körper (1) des Fräskopfs zusammenarbeiten.

Fig. 1

Fig. 2

Fig. 3

Fig. 4

Fig. 5